# EUROPEAN PATENT APPLICATION

(11) **EP 3 916 217 A1**
(43) Date of publication of application: **01.12.2021**
(21) Application number: 20176942.9
(22) Date of filing: 27.05.2020
(51) Int. Cl.: F03D 1/06

(54) **WIND TURBINE BLADE AND METHOD OF DECIDING ARRANGEMENT OF VORTEX GENERATORS FOR WIND TURBINE BLADE**

(71) Applicant: Vestas Offshore Wind A/S, 8200 Aarhus N. (DK)
(72) Inventor: HARADA, Motoshi, Tokyo, 1008332 (JP); SATO, Kenji, 8200 Aarhus N (DK)
(74) Representative: Vestas Patents Department

(57) **Abstract**

A wind turbine blade includes a plurality of vortex generators. The plurality of vortex generators include a plurality of fins. A fin closest to a blade tip of the plurality of fins is positioned between a blade root, and a middle position between the blade tip and the blade root. Provided that r/R is a ratio of a radial direction position r to a radius R of a wind turbine rotor including the wind turbine blade, and x/c is a ratio of a chord direction position x to a chord length c of the wind turbine blade, the plurality of fins include at least one first fin arranged in a region satisfying 0≤r/R≤0.1 and 0≤x/c≤0.2, and at least one second fin arranged in a region satisfying 0.1≤r/R≤0.3 and 0.1≤x/c≤0.5.

## Description

### TECHNICAL FIELD

The present disclosure relates to a wind turbine blade and a method of deciding arrangement of vortex generators for the wind turbine blade.

### BACKGROUND ART

Conventionally, attempts to improve aerodynamic performance of a wind turbine blade have been made in order to improve operating efficiency of a wind turbine. One of the attempts is to provide a vortex generator (VG) on a surface of the wind turbine blade to suppress separation of a flow along the surface of the wind turbine blade.

Patent Document 1 discloses a wind turbine blade aiming at suppressing occurrence of a drag penalty, which is a drag generated by a vortex generator.

### Citation List

### Patent Literature

Patent Document 1: JP2019-78192A

### SUMMARY

A wind turbine blade according to at least one embodiment of the present disclosure is a further modification of the wind turbine blade disclosed in Patent Document 1 described above, and an object thereof is to provide a wind turbine blade having high aerodynamic performance and a method of deciding arrangement of vortex generators for the wind turbine blade.

In order to achieve the above-described object, a wind turbine blade according to at least one embodiment of the present disclosure is a wind turbine blade including a plurality of vortex generators. The plurality of vortex generators include a plurality of fins. A fin closest to a blade tip of the plurality of fins is positioned between a blade root, and a middle position between the blade tip and the blade root. Provided that r/R is a ratio of a radial direction position r to a radius R of a wind turbine rotor including the wind turbine blade, and x/c is a ratio of a chord direction position x to a chord length c of the wind turbine blade, the plurality of fins include at least one first fin arranged in a region satisfying 0≤r/R≤0.1 and 0≤x/c≤0.2, and at least one second fin arranged in a region satisfying 0.1≤r/R≤0.3 and 0.1≤x/c≤0.5.

In order to achieve the above-described object, a method of deciding arrangement of vortex generators for a wind turbine blade according to at least one embodiment of the present disclosure is a method of deciding arrangement of a plurality of vortex generators for a wind turbine blade, including a step of deciding arrangement of a plurality of fins included in the plurality of vortex generators. Provided that r/R is a ratio of a radial direction position r to a radius R of a wind turbine rotor including the wind turbine blade, and x/c is a ratio of a chord direction position x to a chord length c of the wind turbine blade, the step includes a step of deciding arrangement of at least one first fin in a region satisfying 0≤r/R≤0.1 and 0≤x/c≤0.2, and a step of deciding arrangement of at least one second fin in a region satisfying 0.1≤r/R≤0.3 and 0.1≤x/c≤0.5.

According to the present disclosure, a wind turbine blade having high aerodynamic performance and a method of deciding arrangement of vortex generators for the wind turbine blade are provided.

### BRIEF DESCRIPTION OF DRAWINGS

FIG. 1 is a schematic view showing the overall configuration of a wind turbine generator 90 including wind turbine blades 1 according to an embodiment.
FIG. 2 is a schematic view showing the overall configuration of the wind turbine blade 1.
FIG. 3A is a view showing a cross-section of the wind turbine blade 1 and a flow along a blade surface in a second region N under a variable speed operation condition.
FIG. 3B is a view showing the cross-section of the wind turbine blade 1 and the flow along the blade surface in the second region N under a rated wind speed operation condition.
FIG. 4 is a graph showing a position of a separation line where a separation occurs in the flow along the blade surface in the wind turbine blade 1.
FIG. 5 is a view for describing a radial direction position r and a chord direction position x.
FIG. 6 is a graph showing the relationship between a ratio r/R and an angle of attack of the wind turbine blade 1.
FIG. 7 is a graph showing the arrangement of an array 14 of vortex generators 10.
FIG. 8 is a graph showing the relationship between an average wind speed and an increase rate of Annual Energy Production (ΔAEP).
FIG. 9 is a schematic perspective view showing a configuration example of the vortex generator 10.
FIG. 10 is a plan view of the vortex generator 10 shown in FIG. 9.
FIG. 11 is a schematic view showing an array pitch of fin sets.
FIG. 12 is a view showing a part of the array 14 of the vortex generators 10.
FIG. 13 is a graph showing the arrangement of an array 16 of fins 12 of the wind turbine blade 1.
FIG. 14A is a view showing a position of a first fin 12a on a blade cross-section of the wind turbine blade 1.
FIG. 14B is a view showing a position of a second fin 12b on the blade cross-section of the wind turbine blade 1.
FIG. 15 is a schematic view showing the overall configuration of the wind turbine blade 1 of a flat back airfoil.

### DETAILED DESCRIPTION

Embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, the expressions "comprising", "including", "having", "containing", and "constituting" one constitutional component are not exclusive expressions that exclude the presence of other constitutional components.

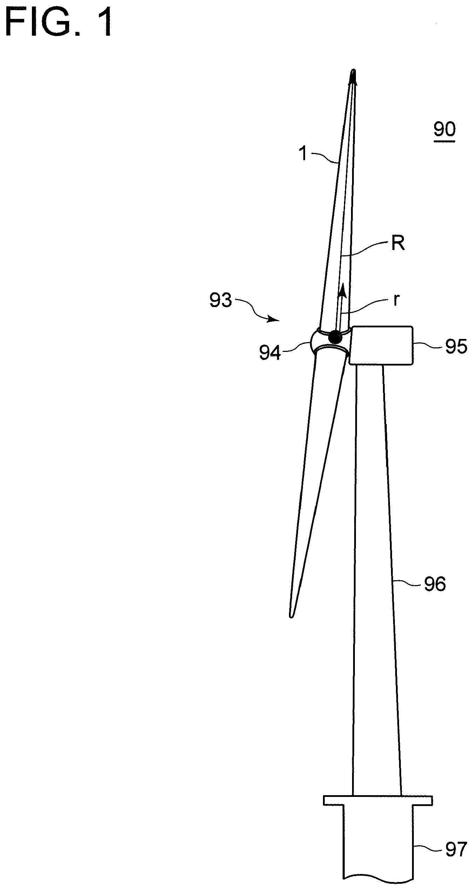

FIG. 1 is a schematic view showing the overall configuration of a wind turbine generator 90 including wind turbine blades 1 according to an embodiment.

As shown in FIG. 1, the wind turbine generator 90 includes a tower 96 mounted on a foundation 97, a nacelle 95 disposed at the upper end of the tower 96, and a wind turbine rotor 93 rotatably supported by a bearing (not shown) disposed in the nacelle 95. The wind turbine rotor 93 includes a hub 94 and the plurality of wind turbine blades 1 disposed on the outer peripheral side of the hub 94 at intervals in a circumferential direction of the wind turbine rotor 93.

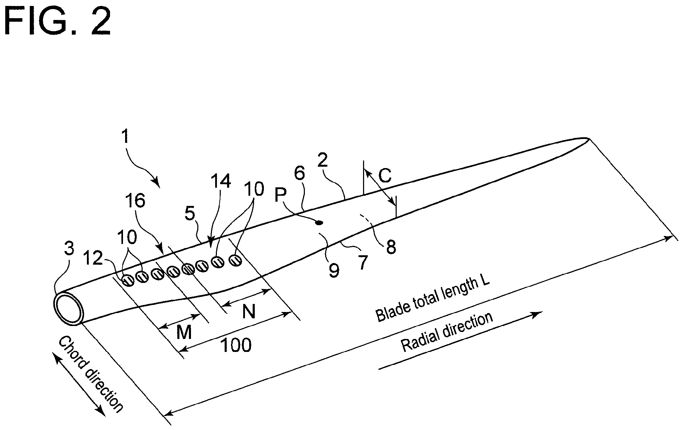

FIG. 2 is a schematic view showing the overall configuration of the wind turbine blade 1.

As shown in FIG. 2, the wind turbine blade 1 includes a wind turbine blade main body 2 and a plurality of vortex generators 10 disposed on the surface of the wind turbine blade main body 2 (may simply be referred to as a "blade surface" hereinafter).

The wind turbine blade main body 2 includes a blade root 3 attached to the hub 94, a blade tip positioned farthest from the blade root 3, and an airfoil part 5 extending between the blade root 3 and the blade tip. Moreover, the outer shape of the wind turbine blade main body 2 is formed by a pressure side 8 connecting a leading edge 6 and trailing edge 7 of the wind turbine blade 1, and a suction side 9 connecting the leading edge 6 and the trailing edge 7 on an opposite side to the pressure side 8.

The plurality of vortex generators 10 are mounted on the suction side 9 of the wind turbine blade 1. Moreover, the plurality of vortex generators 10 are arranged along a direction crossing a blade chord direction of the wind turbine blade 1 and forms an array 14 of the vortex generators 10. Moreover, the vortex generator 10 closest to the blade tip 4 of the array 14 of the vortex generators 10 is positioned between the blade root 3, and a middle position P between the blade tip 4 and the blade root 3. The middle position P corresponds to a position half a blade total length L.

As shown in FIG. 2, in the present specification, the "blade total length L" means the total length of the wind turbine blade 1, that is, the length L from the blade root 3 to the blade tip 4 of the wind turbine blade 1. Moreover, the "radial direction" refers to a radial direction of the wind turbine rotor 93, and the "blade chord direction" refers to a direction along a chord (chord line) connecting the leading edge 6 and trailing edge 7 of the wind turbine blade 1 (may simply be referred to as a "chord direction" hereinafter).

As shown in FIG. 2, a region 100 where the vortex generators 10 are mounted on the surface of the wind turbine blade main body 2 includes a first region M and a second region N which is closer to the blade tip 4 than the first region M. The arrangement of the vortex generators 10 is decided by a method suitable for each of the regions M, N.

In general, in the first region M which is very close to the blade root 3, the maximum blade thickness ratio is high, and it is difficult to accurately predict a transition position and separation position of a flow along the blade surface. However, numerical calculation is performed here by using a CFD analysis as a flow analysis for each of a blade sound state, where the blade surface is smooth, and a blade degradation state, where the blade surface is rough. Moreover, operation conditions (variable speed operation condition, rated wind speed condition) of the wind turbine generator are also used by designating the wind speed, a rotation speed, and the angle of attack. As shown in FIG. 2, the first region M and the second region N may not necessarily be adjacent to each other, and it is also possible to interpose the third region between the first region M and the second region N.

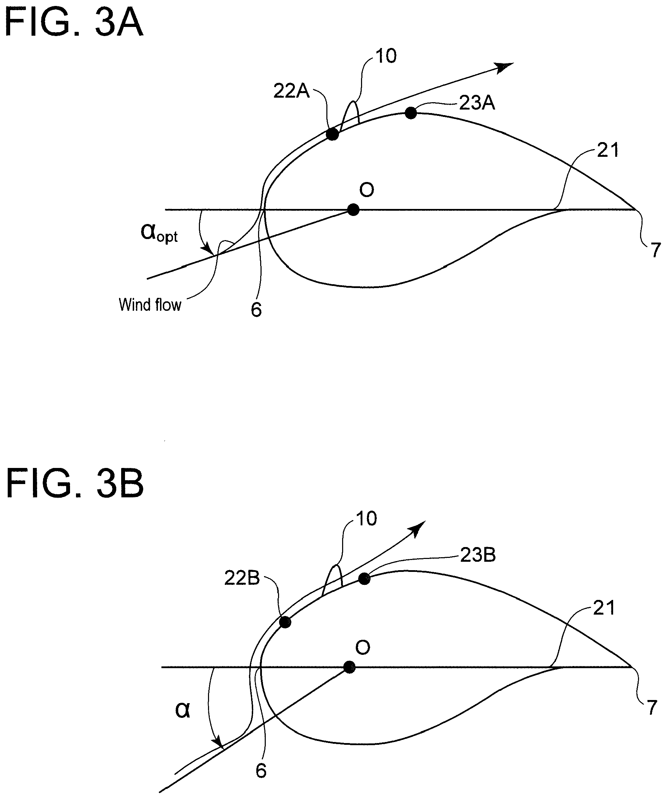

FIG. 3A is a view showing a cross-section of the wind turbine blade 1 and a flow along the blade surface in the second region N under the variable speed operation condition. FIG. 3B is a view showing the cross-section of the wind turbine blade 1 and the flow along the blade surface in the second region N under the rated wind speed operation condition.

As shown in FIGS. 3A and 3B, in the second region N, an angle of attack α under the rated wind speed condition is larger than an angle of attack αₒₚₜ under the variable speed operation condition. That is, the angle of attack α indicating a state under the rated wind speed condition is larger than the angle of attack α (optimum angle of attack αₒₚₜ) indicating a state under the variable speed operation condition. The angle of attack α is an angle between a wind inflow direction and a chord 21 of the wind turbine blade 1 on the cross-section of the wind turbine blade 1.

A transition position 22B and separation position 23B of the flow along the blade surface in a case where the angle of attack α is relatively large (see FIG. 3B) shift to the side of the leading edge 6 of the wind turbine blade 1, as compared with a transition position 22A and separation position 23A of the flow along the blade surface in a case where the angle of attack α is relatively small (see FIG. 3A). Therefore, the transition position 22B and the separation position 23B at the time of the rated wind speed shift to the side of the leading edge 6 of the wind turbine blade 1, as compared with the transition position 22A and the separation position 23A at the time of the variable speed operation.

Thus, in some embodiments, as shown in FIG. 3A, the position of the vortex generator 10 in the second region N is decided between the trailing edge 7 and the transition position 22A at the time of the variable speed operation. Furthermore, the position of the vortex generator 10 in the second region N is decided at a position closer to the leading edge 6 than the separation position 23B under the rated wind speed condition.

Accordingly, it is possible to decide an appropriate position of the vortex generator 10 in consideration of a difference in angle of attack α between the variable speed operation condition and the rated wind speed condition, and thus it is possible to suppress separation of the flow along the blade surface even in a case where the angle of attack α increases with an increase in wind speed after the reach of a rated rotation speed.

Moreover, as compared with the blade sound state where the blade surface is smooth, in the blade degradation state where the blade surface is rough, the transition position and separation position of the flow along the blade surface are offset to the side of the leading edge 6. Thus, in some cases, it is desirable to set the position of the vortex generator 10 in the second region N to a position capable of enjoying an aerodynamic effect of the vortex generator 10 not only in the blade sound state but also in the blade degradation state considering the aging degradation of the blade surface.

Thus, since the position of the vortex generator 10 is closer to the leading edge 6 than the separation position 23B under the rated wind speed condition in the blade degradation state, it is possible to enjoy an effect of the vortex generator 10 and to improve a lift-drag ratio, regardless of the degradation state of the wind turbine blade 1.

Since the angle of attack is the largest, and a gain of the effect of the vortex generator 10 is generally large in a blade root region, a design wind speed is a design target of the vortex generator 10. In the present research, the numerical calculation is performed assuming a steady constant wind speed and rotor speed. Then, the numerical calculation captures the separation line, a transition of a boundary layer from a laminar flow to a turbulent flow, vortex shedding from the vortex generator 10, a separation delay by the vortex generator 10, and Annual Energy Production (AEP).

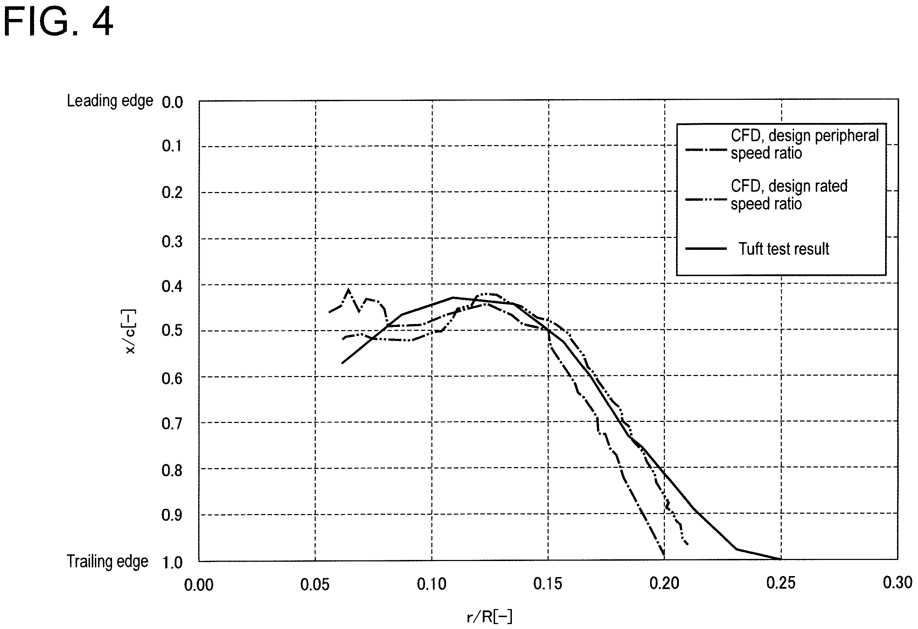

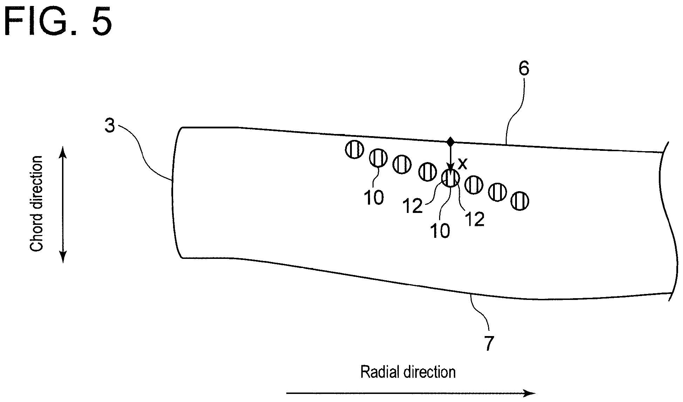

FIG. 4 is a graph showing a position of a separation line where a separation occurs in the flow along the blade surface in the wind turbine blade 1. In FIG. 4, the abscissa indicates a ratio r/R of a radial direction position r to a radius R of the wind turbine rotor 93 (see FIG. 1), and the ordinate indicates a ratio x/c of the chord direction position x to a chord length c of the wind turbine blade 1. As shown in FIG. 1, the radial direction position r is a position in the radial direction of the wind turbine rotor 93 with reference to a rotation center of the wind turbine rotor 93. Moreover, as shown in FIG. 5, the chord direction position x is a position in the chord direction with reference to the leading edge 6 of the wind turbine blade 1.

In FIG. 4, a single-dotted chain line indicates a position of the separation line calculated by a CFD analysis under the conditions of a design peripheral speed ratio and the blade sound state, a double-dotted chain line indicates a position of the separation line calculated by the CFD analysis under the conditions of a rated peripheral speed ratio and the blade sound state, and a solid line indicates a position (average position) of the separation line determined by a result of a tuft test.

As shown in FIG. 4, in a range satisfying 0.12≤r/R≤0.19, the position of the separation line indicated by the result of the tuft test is between the two separation lines indicated by two results of the CFD analysis respectively, and the results of the CFD analysis substantially match the result of the tuft test. In a range satisfying 0.19<r/R, however, the CFD analysis cannot capture the separation line. Moreover, based on the result of the tuft test, it became clear that the vortex generator 10 is desirably added to a range satisfying 0.2<r/R<0.25.

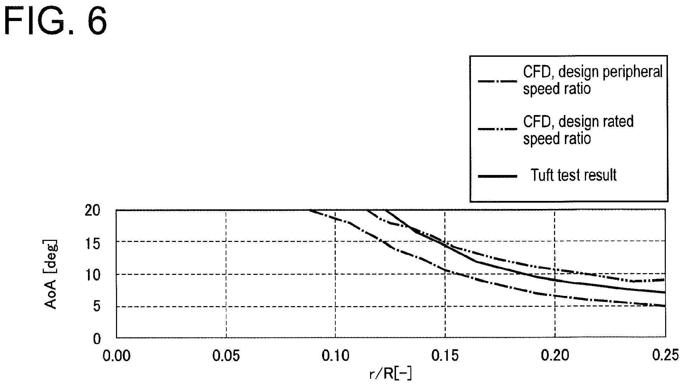

FIG. 6 is a graph showing the relationship between the above-described ratio r/R and an Angle of Attack (AoA) of the wind turbine blade 1. In FIG. 6, a single-dotted chain line corresponds to the CFD analysis under the conditions of the design peripheral speed ratio and the blade sound state, a double-dotted chain line corresponds to the CFD analysis under the conditions of the rated peripheral speed ratio and the blade sound state, and a solid line corresponds to the tuft test.

As shown in FIG. 6, the angle of attack at the rated peripheral speed ratio is larger than the angle of attack at the design peripheral speed ratio, and in the range of 0.15<r/R, the angle of attack in the tuft test is between the angle of attack at the rated peripheral speed ratio and the angle of attack at the design peripheral speed ratio in the CFD analysis.

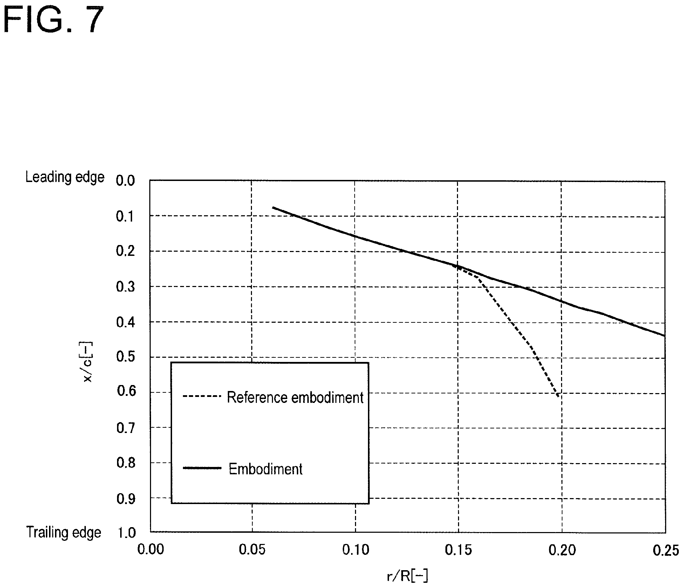

FIG. 7 is a graph showing the arrangement of the array 14 of the vortex generators 10. In FIG. 7, the abscissa indicates the above-described ratio r/R, and the ordinate indicates the above-described ratio x/c. In FIG. 7, a solid line indicates the arrangement of the array 14 of the vortex generators 10 according to an embodiment, and a dashed line indicates arrangement of the array of the vortex generators 10 (arrangement of the array of the vortex generators 10 determined by the results of the CFD analysis) according to a reference embodiment.

In the embodiment shown in FIG. 7, the array 14 of the vortex generators 10 is linearly arranged in a region satisfying 0.05<r/R<0.25 and 0<x/c<0.5. Moreover, a position of each of the vortex generators 10 is determined based on the results of the CFD analysis in a region satisfying 0.05<r/R≤0.15, and is determined at a position shifted to the side of the leading edge 6 of the wind turbine blade 1 based on the result of the tuft test with respect to the position determined by the results of the CFD analysis. Moreover, in a range satisfying 0.20<r/R<0.25, while the vortex generators 10 are not disposed in the reference embodiment, the vortex generators 10 are disposed in the embodiment. In both the embodiment shown in FIG. 6 and the reference embodiment, the vortex generators 10 are not disposed in a range satisfying r/R>0.25.

In some embodiments, as shown in FIG. 7, the chord direction position x of each of the plurality of vortex generators 10 is a position decided based on the results of the CFD analysis in a region satisfying r/R≤0.2, and is a position shifted to the side of the leading edge 6 of the wind turbine blade 1 with respect to the position determined by the results of the CFD analysis (the position indicated by the dashed line in FIG. 7) in a region satisfying 0.15≤r/R≤0.3.

According to the result of FIG. 6, a change in angle of attack is not so large in the range of 0.2<r/R<0.25, as compared with the range of 0.15≤r/R≤0.19. Associating this regard with a conclusion that the vortex generator 10 is desirably added to the range satisfying 0.2<r/R<0.25 shown in FIG. 4, it is reasonably derived that the position of the vortex generator 10 is arranged linearly with a small change with regard to the chord direction position x which is the position of the embodiment shown in FIG. 7.

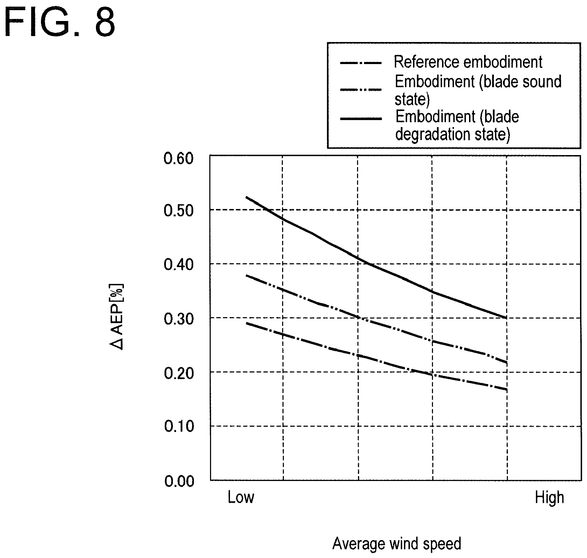

FIG. 8 is a graph showing the relationship between an average wind speed and an increase rate of Annual Energy Production (ΔAEP). In FIG. 8, a solid line indicates a blade degradation state of the embodiment shown in FIG. 7, a double-dotted chain line indicates a blade sound state of the embodiment shown in FIG. 7, and a single-dotted chain line indicates a blade sound state of the reference embodiment shown in FIG. 7.

In the reference embodiment, the Annual Energy Production is estimated to improve by 0.2% in an average annual wind speed. Moreover, in the blade sound state of the embodiment, an increase rate of Annual Energy Production by optimizing the position of the vortex generator 10 is estimated at +0.25% in the average annual wind speed. Furthermore, in the blade degradation state of the embodiment, the increase rate of the Annual Energy Production is estimated at +0.35% based on aerodynamic data of an airfoil.

Thus, with the wind turbine blade 1 according to the embodiment, it is possible to increase the Annual Energy Production by adding the vortex generator 10 to the region satisfying 0.20<r/R<0.25. Moreover, it became clear that the effect thereof increases in the blade degradation state.

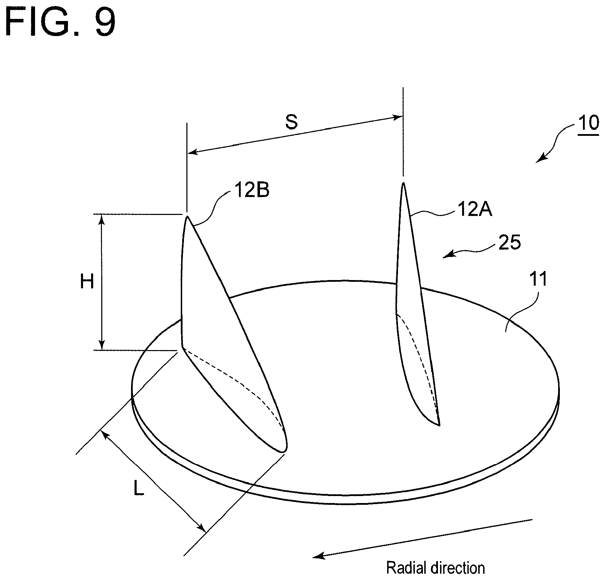

FIG. 9 is a schematic perspective view showing a configuration example of the vortex generator 10.

In some embodiments, as shown in FIG. 9, each of the plurality of vortex generators 10 of the wind turbine blade 1 includes a fin set 25 formed by a pair of adjacent fins 12A, 12B and a platform 11 for supporting the pair of fins 12A, 12B. That is, the plurality of vortex generators 10 of the wind turbine blade 1 includes the plurality of fins 12 and the plurality of platforms 11, the plurality of fins 12 include the plurality of fin sets 25 each formed by the pair of fins 12A, 12B, and each of the platforms 11 is disposed for a corresponding one of the fin sets 25 so as to support the pair of fins 12A, 12B. In the illustrative embodiment shown in FIG. 9, the platform 11 has a disc shape.

Moreover, the plurality of fins 12 of the wind turbine blade 1 are arranged along the direction crossing the blade chord direction and forms an array 16 of the fins 12. The fin 12 closest to the blade tip 4 of the plurality of fins 12 of the wind turbine blade 1 (all the fins 12 of the wind turbine blade 1) is positioned between the blade root 3, and the middle position P between the blade tip 4 and the blade root 3 (see FIG. 2).

In some embodiments, for example, as shown in FIG. 9, provided that S is an interval between respective trailing edges 19 of the pair of fins 12A, 12B, and H is a height of each of the pair of fins 12A, 12B, 2.5≤S/H≤5.0 is satisfied.

By thus installing the fins 12A, 12B to establish an appropriate relationship between the height of the fin 12A, 12B and the interval between the fins 12A and 12B, it is possible to suppress an increase in drag by the vortex generator 10 while suppressing separation of the flow along the blade surface of the wind turbine blade 1.

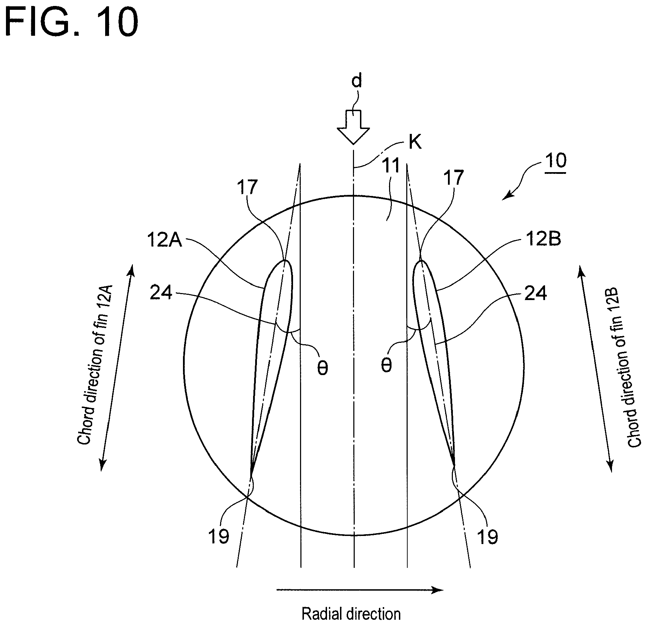

FIG. 10 is a plan view of the vortex generator 10 shown in FIG. 9.

In some embodiments, for example, as shown in FIG. 10, the pair of fins 12A, 12B are arranged plane-symmetrically with respect to a plane K along the chord direction of the wind turbine blade 1.

Thus, it is possible to stabilize generation of a vortex by the vortex generator 10 by arranging the pair of fins 12A, 12B in an appropriate direction with respect to the wind inflow direction.

In some embodiments, for example, as shown in FIG. 10, an angle θ formed by a fin chord 24 of each of the plurality of fins 12 with respect to the wind inflow direction d satisfies 12°≤θ≤18°. The fin chord 24 is a line segment connecting a leading edge 17 of the fin 12 and the trailing edge 19 of the fin 12.

With the above configuration, it is possible to suppress the increase in drag by the vortex generator 10 while suppressing the separation of the flow along the blade surface of the wind turbine blade 1 by arranging the fins 12 in an appropriate direction according to the wind inflow direction d.

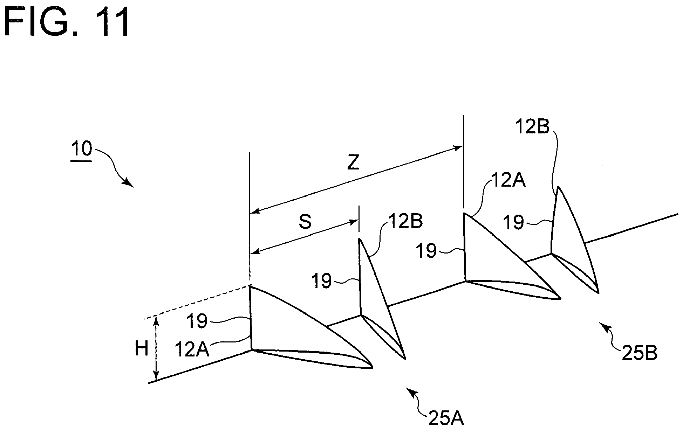

FIG. 11 is a schematic view showing an array pitch of fin sets.

In some embodiments, for example, as shown in FIG. 11, provided that Z is an array pitch of two adjacent fin sets 25A, 25B of the plurality of fin sets 25, and S is the interval between the respective trailing edges 19 of the pair of fins 12A, 12B, 1.5≤Z/S≤3.0 is satisfied.

In order to improve the effect of suppressing separation, it is desirable to arrange the vortex generators 10 in high density. On the other hand, in order to reduce the drag, it is desirable to arrange the vortex generators 10 in low density. Thus, by arranging the vortex generators 10 in density satisfying 1.5≤Z/S≤3.0, it is possible to achieve both the effect of suppressing separation and the effect of suppressing the increase in drag.

In some embodiments, for example, as shown in FIG. 11, provided that Z is the array pitch of the two adjacent fin sets 25 of the plurality of fin sets 25, and H is the height of each of the pair of fins 12A, 12B, 6.0≤Z/H≤8.0 is satisfied.

As described above, with the object of increasing the effect of suppressing separation, it is desirable to arrange the fins 12 of the vortex generators 10 in high density. On the other hand, as the adjacent fin sets are arranged closer to one another, the effect of suppressing separation may be reduced due to interference among generated longitudinal vortexes. Thus, by arranging the vortex generators 10 so as to satisfy 6.0≤Z/H≤8.0 as described above, it is possible to suppress the increase in drag while suppressing separation.

In some embodiments, for example, as shown in FIG. 11, provided that H is the height of each of the pair of fins 12A, 12B, 0.02≤H/R≤0.07 is satisfied.

With the above configuration, it is possible to suppress the increase in drag while suppressing separation by adopting the fins 12 each having the appropriate height according to the radius R of the wind turbine rotor 93.

In some embodiments, for example, as shown in FIG. 11, provided that H is the height of each of the pair of fins 12A, 12B, and C (not shown) is a maximum chord length of the wind turbine blade, 0.3%≤H/C≤0.9% is satisfied. The maximum chord length C of the wind turbine blade 1 is a maximum chord length of the chord length c of the wind turbine blade 1.

With the above configuration, it is possible to suppress the increase in drag while suppressing separation by adopting the fins 12 each having the appropriate height according to the maximum chord length C of the wind turbine blade 1.

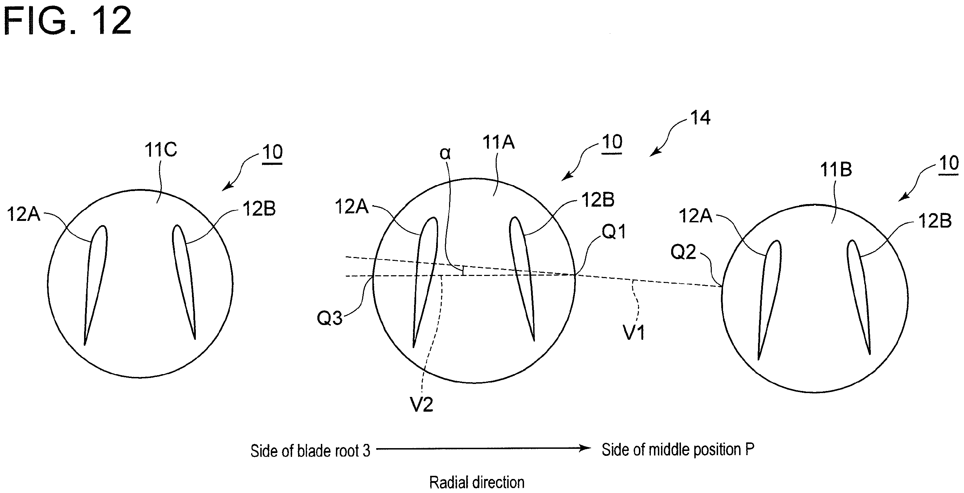

FIG. 12 is a view showing a part of the array 14 of the vortex generators 10.

In some embodiments, for example, as shown in FIG. 12, the plurality of platforms 11 of the plurality of vortex generators 10 include a first platform 11A, a second platform 11B arranged adjacent to the first platform 11A between the first platform 11A and the middle position P, and a third platform 11C arranged adjacent to the first platform 11A between the first platform 11A and the blade root 3.

A straight line connecting a position Q1 and a position Q2 is defined as a first straight line V1. The position Q1 is closest to the second platform 11B in the first platform 11A. The position Q2 is closest to the first platform 11A in the second platform 11B. Moreover, a straight line connecting the position Q1 and a position Q3 is defined as a second straight line V2. The position Q1 in the first platform 11A is closest to the second platform 11B. The position Q3 in the first platform 11A is closest to the third platform 11C. In this case, the angle α between the first straight line V1 and the second straight line V2 in the wind turbine blade 1 is not greater than 20 degrees. The plurality of platforms 11 are thus arranged linearly. However, the above-described positions Q1, Q2, Q3 may not be disposed in a straight line.

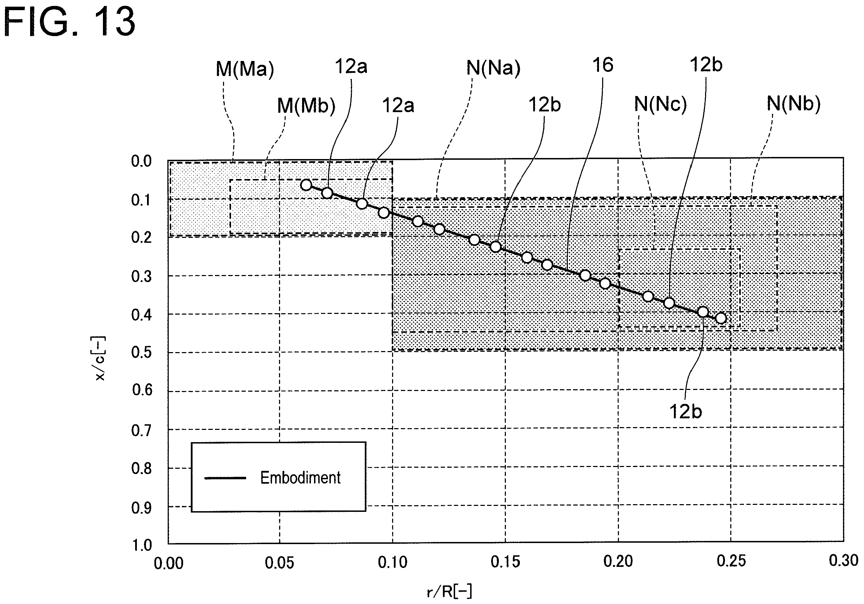

Next, the specific arrangement of the plurality of fins 12 of the wind turbine blade 1 described above will be described with reference to FIG. 13. FIG. 13 is a graph showing the arrangement of the array 16 of the fins 12 of the wind turbine blade 1. In FIG. 13, the abscissa indicates the above-described ratio r/R, and the ordinate indicates the above-described ratio x/c. A solid line shown in FIG. 13 corresponds to the embodiment shown in FIG. 7 and indicates the array 16 of the plurality of fins 12.

As shown in FIG. 13, the plurality of fins 12 of the wind turbine blade 1 include at least one first fin 12a arranged in the first region M (Ma) satisfying 0≤r/R≤0.1 and 0≤x/c≤0.2, and at least one second fin 12b arranged in the second region N (Na) satisfying 0.1≤r/R≤0.3 and 0.1≤x/c≤0.5.

With the above configuration, it is possible to implement the wind turbine blade 1 having high aerodynamic performance capable of suppressing the increase in drag caused by the vortex generator 10 while suppressing the separation of the flow along the blade surface of the wind turbine blade 1. Thus, it is possible to implement an increase in energy production and an increase in torque of the wind turbine blade 1. In the embodiment shown in FIG. 13, the plurality of first fins 12a are arranged in the first region M (Ma), and the plurality of second fins 12b are arranged in the second region N (Na).

In some embodiments, as shown in FIG. 13, the above-described at least one first fin 12a includes the at least one first fin 12a arranged in the first region M (Mb) satisfying 0.03≤r/R≤0.1 and 0.05≤x/c≤0.19. Moreover, the above-described at least one second fin 12b includes the at least one second fin 12b arranged in the second region N (Nb) satisfying 0.1≤r/R≤0.27 and 0.12≤x/c≤0.47.

With the above configuration, it is possible to implement the wind turbine blade 1 having high aerodynamic performance capable of suppressing the increase in drag caused by the vortex generator 10 while suppressing the separation of the flow along the blade surface of the wind turbine blade 1. Thus, it is possible to effectively increase the energy production and the torque of the wind turbine blade 1. The plurality of fins 12 may be arranged in each of the first region M (Mb) and the second region N (Nb). In the embodiment shown in FIG. 13, the plurality of first fins 12a are arranged in the first region M (Mb), and the plurality of second fins 12b are arranged in the second region N (Nb).

In some embodiments, as shown in FIG. 13, the above-described at least one second fin 12b includes the at least one second fins 12b arranged in the second region N (Nc) satisfying 0.2≤r/R≤0.25 and 0.25≤x/c≤0.45.

With the above configuration, it is possible to implement the wind turbine blade 1 having high aerodynamic performance capable of suppressing the increase in drag caused by the vortex generator 10 while suppressing the separation of the flow along the blade surface of the wind turbine blade 1. Thus, it is possible to effectively increase the energy production and the torque of the wind turbine blade. In the embodiment shown in FIG. 13, the plurality of second fins 12b are arranged in the second region N (Nc).

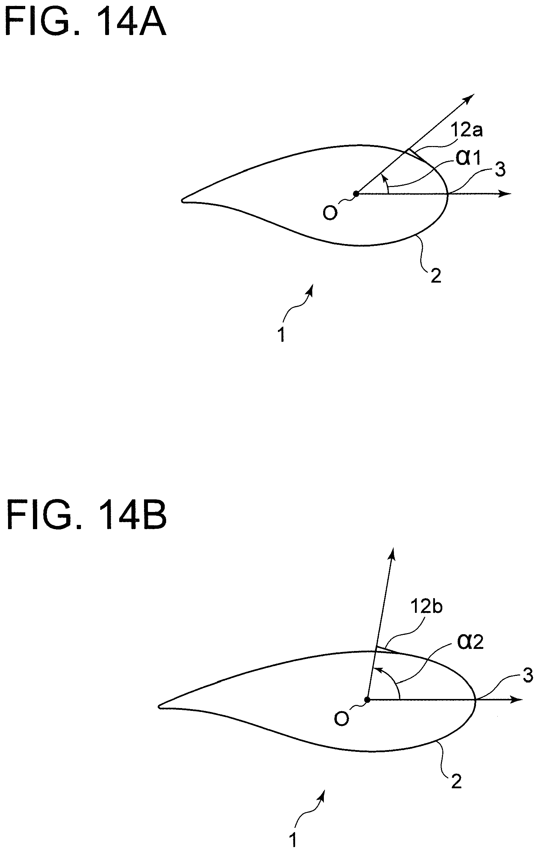

FIG. 14A is a view showing a position of the first fin 12a on a blade cross-section of the wind turbine blade 1. FIG. 14B is a view showing a position of the second fin 12b on the blade cross-section of the wind turbine blade 1.

In some embodiments, for example, as shown in FIG. 14A or 14B, provided that, around a pitch rotation axis O of the wind turbine blade 1, α1 is an angle from the leading edge 6 of the wind turbine blade 1 to the first fin 12a, and α2 is an angle from the leading edge 6 of the wind turbine blade 1 to the second fin 12b, the above-described at least one first fin 12a includes the at least one first fin 12a arranged so as to satisfy 25°≤α1≤50°, and the above-described at least one second fin 12b includes the at least one second fin 12b arranged so as to satisfy 40°≤α2≤90°.

The pitch rotation axis O is a rotation axis of the wind turbine blade 1 defining a pitch angle of the wind turbine blade 1. Moreover, it is desirable that the above-described at least one first fin 12a may include the at least one first fin 12a arranged so as to satisfy 30°≤α1≤45°, and the above-described at least one second fin 12b may include the at least one second fin 12b arranged so as to satisfy 50°≤α2≤80°.

As a result of intensive researches by the present inventors, it became clear that appropriate arrangement of the vortex generators 10 around the pitch rotation axis O of the wind turbine blade 1 is different depending on the radial direction position in order to suppress the separation of the flow along the blade surface of the wind turbine blade 1. Thus, by appropriately setting the angular positions α of the first fin 12a and the second fin 12b, which are different in the radial direction position r, from the leading edge 6 around the pitch rotation axis O as described above, it is possible to suppress the increase in drag while suppressing separation. The above-described at least one first fin 12a may include the plurality of first fins 12a arranged so as to satisfy 25°≤α1≤50°, and the above-described at least one second fin 12b may include the plurality of second fins 12b arranged so as to satisfy 40≤α2≤90°.

The present disclosure is not limited to the above-described embodiments, and also includes an embodiment obtained by modifying the above-described embodiments and an embodiment obtained by combining these embodiments as appropriate.

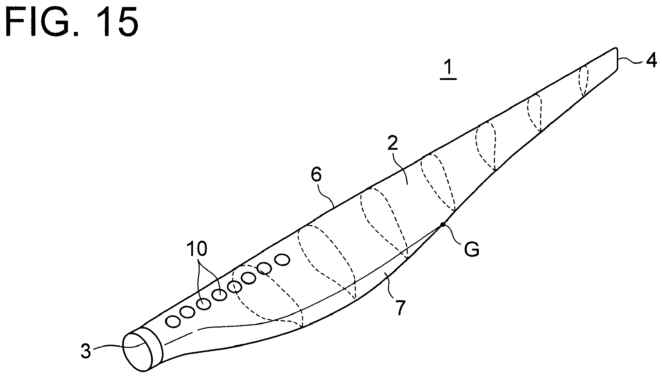

For example, in some embodiments, a flat back airfoil may be adopted for the wind turbine blade 1. In this case, as shown in FIG. 15, the plurality of fins 12 of the wind turbine blade 1 (all the fins 12 of the wind turbine blade 1) may be arranged between the blade root 3 and a starting point G of a flat back of the wind turbine blade 1.

In a region close to the blade root 3, the flat back airfoil giving a thickness to the trailing edge 7 is adopted, making it possible to maintain a lift up to a large angle of attack while suppressing separation. On the other hand, separation is less likely to occur in a region between the blade tip 4 and the starting point G of the flat back (a position of a region, where the flat back airfoil is provided, closest to the blade tip 4). If the vortex generators 10 are arranged in the region, a disadvantage in occurrence of drag is likely to dominate. In this regard, since the plurality of fins 12 of the wind turbine blade 1 are arranged between the blade root 3 and the starting point G of the flat back, it is possible to suppress the increase in drag while suppressing separation.

The contents described in the above embodiments would be understood as follows, for instance.
(1) A wind turbine blade (for example, the above-described wind turbine blade 1) according to at least one embodiment of the present disclosure is a wind turbine blade including a plurality of vortex generators (for example, the above-described vortex generators 10). The plurality of vortex generators include a plurality of fins (for example, the above-described fins 12). A fin closest to a blade tip (for example, the above-described blade tip 4) of the plurality of fins is positioned between a blade root (for example, the above-described blade root 3), and a middle position between the blade tip and the blade root. Provided that r/R is a ratio of a radial direction position r to a radius R of a wind turbine rotor including the wind turbine blade, and x/c is a ratio of a chord direction position x to a chord length c of the wind turbine blade, the plurality of fins include at least one first fin (for example, the above-described fin 12) arranged in a region (for example, the above-described first region M (Ma)) satisfying 0≤r/R≤0.1 and 0≤x/c≤0.2, and at least one second fin (for example, the above-described fin 12) arranged in a region (for example, the above-described second region N (Na)) satisfying 0.1≤r/R≤0.3 and 0.1≤x/c≤0.5.
   With the wind turbine blade defined in the above configuration (1), it is possible to implement the wind turbine blade having high aerodynamic performance capable of suppressing an increase in drag caused by the vortex generators while suppressing the separation of the flow along the blade surface of the wind turbine blade. Thus, it is possible to implement an increase in energy production and an increase in torque of the wind turbine blade.
(2) In some embodiments, in the wind turbine blade defined in the above configuration (1), the plurality of fins include a plurality of fin sets (for example, the above-described fin sets 25) each formed by a pair of adjacent fins (for example, the above-described fins 12A 12B), and the plurality of vortex generators include, for each of the fin sets, a platform (for example, the above-described platform 11) for supporting the pair of fins.
   With the wind turbine blade defined in the above configuration (2), it is possible to fix the vortex generators to the blade surface while appropriately ensuring the interval between the pair of fins.
(3) In some embodiments, in the wind turbine blade defined in the above configuration (2), a plurality of platforms of the plurality of vortex generators include a first platform (for example, the above-described first platform 11A), a second platform (for example, the above-described second platform 11B) arranged adjacent to the first platform between the first platform and the middle position, and a third platform (for example, the above-described third platform 11C) arranged adjacent to the first platform between the first platform and the blade root, and defining a straight line connecting a position (for example, the above-described position Q1) closest to the second platform in the first platform and a position (for example, the above-described position Q2) closest to the first platform in the second platform as a first straight line (for example, the above-described first straight line VI), and defining a straight line connecting the position closest to the second platform in the first platform and a position (for example, the above-described position Q3) closest to the third platform in the first platform as a second straight line (for example, the above-described second straight line V2), an angle (for example, the above-described angle α) between the first straight line and the second straight line is not greater than 20 degrees.
   As defined in the above configuration (3), the first straight line and the second straight line may not be parallel to each other, and the plurality of platforms may not be arranged linearly in a strict sense.
(4) In some embodiments, in the wind turbine blade defined in any one of the above configurations (1) to (3), the at least one first fin includes at least one fin arranged in a region (for example, the above-described first region M (Mb)) satisfying 0.03≤r/R≤0.1 and 0.05≤x/c≤0.19, and the at least one second fin includes at least one fin arranged in a region (for example, the above-described second region N (Nb)) satisfying 0.1≤r/R≤0.27 and 0.12≤x/c≤0.47.
   With the wind turbine blade defined in the above configuration (4), it is possible to implement the wind turbine blade having high aerodynamic performance capable of suppressing the increase in drag caused by the vortex generators while effectively suppressing separation of the flow along the blade surface of the wind turbine blade. Thus, it is possible to effectively increase the energy production and the torque of the wind turbine blade.
(5) In some embodiments, in the wind turbine blade defined in the above configuration (4), the at least one second fin includes at least one fin arranged in a region (for example, the above-described second region N (Nc)) satisfying 0.2≤r/R≤0.25 and 0.25≤x/c≤0.45.
   With the wind turbine blade defined in the above configuration (5), it is possible to implement the wind turbine blade having high aerodynamic performance capable of suppressing the increase in drag caused by the vortex generators while effectively suppressing separation of the flow along the blade surface of the wind turbine blade. Thus, it is possible to effectively increase the energy production and the torque of the wind turbine blade.
(6) In some embodiments, in the wind turbine blade defined in any one of the above configurations (1) to (5), the chord direction position x of each of the plurality of vortex generators is a position decided based on a result of a CFD analysis, in a region satisfying r/R≤0.2, and a position shifted to a side of a leading edge (for example, the above-described leading edge 6) of the wind turbine blade with respect to the position determined by the result of the CFD analysis, in a region satisfying 0.15≤r/R≤0.3.
   As a result of intensive researches by the present inventors, the finding became clear that a region to be decided based on the result of the CFD analysis and a region to be shifted to the side of the leading edge of the wind turbine blade with respect to the position determined by the result of the CFD analysis exist as the chord direction position x of each of the plurality of vortex generators, in order to suppress the separation of the flow along the blade surface of the wind turbine blade. Thus, by arranging the vortex generators as defined in the above configuration (6) based on the above finding, it is possible to suppress both the separation of the flow along the blade surface of the wind turbine blade and the increase in drag caused by the vortex generators, more effectively.
(7) In some embodiments, in the wind turbine blade defined in any one of the above configurations (1) to (6), the plurality of fins include a plurality of fin sets (for example, the above-described fin sets 25) each formed by a pair of adjacent fins (for example, the above-described fins 12A, 12B), and provided that Z is an array pitch of two adjacent fin sets of the plurality of fin sets, and S is an interval between respective trailing edges (for example, the above-described trailing edges 19) of the pair of fins, 1.5≤Z/S≤3.0 is satisfied.
   In order to improve the effect of suppressing separation, it is desirable to arrange the vortex generators in high density. On the other hand, in order to reduce the drag, it is desirable to arrange the vortex generators in low density. Thus, by arranging the vortex generators in density satisfying 1.5≤Z/S≤3.0 as defined in the above configuration (7), it is possible to achieve both the effect of suppressing separation and the effect of suppressing the increase in drag.
(8) In some embodiments, in the wind turbine blade defined in any one of the above configurations (1) to (7), the plurality of fins include a plurality of fin sets (for example, the above-described fin sets 25) each formed by a pair of adjacent fins (for example, the above-described fins 12A 12B), and provided that S is an interval between respective trailing edges (for example, the above-described trailing edges 19) of the pair of fins, and H is a height of each of the pair of fins, 2.5≤S/H≤5.0 is satisfied.
   With the wind turbine blade defined in the above configuration (8), by installing the pair of fins to establish an appropriate relationship between the height of each of the pair of fins and the interval between the fins, it is possible to achieve both the effect of suppressing separation and the effect of suppressing the increase in drag.
(9) In some embodiments, in the wind turbine blade defined in any one of the above configurations (1) to (8), the plurality of fins include a pair of adjacent fins (for example, the above-described fins 12A, 12B), and the pair of fins are arranged plane-symmetrically with respect to a plane (for example, the above-described plane K) along a chord direction of the wind turbine blade.
   With the wind turbine blade defined in the above configuration (9), it is possible to stabilize generation of vortexes by the vortex generators by arranging the pair of fins in an appropriate direction with respect to the wind inflow direction.
(10) In some embodiments, in the wind turbine blade defined in any one of the above configurations (1) to (9), the plurality of fins are arranged between the blade root and a starting point (for example, the above-described starting point G) of a flat back of the wind turbine blade.
   In a region close to the blade root, the flat back airfoil giving a thickness to the trailing edge is adopted, making it possible to maintain a lift up to a large angle of attack while suppressing separation. On the other hand, separation is less likely to occur in a region between the blade tip and the starting point of the flat back. If the vortex generators are arranged in the region, a disadvantage in occurrence of drag is likely to dominate. Thus, by arranging the plurality of fins of the wind turbine blade between the blade root and the starting point of the flat back as defined in the above configuration (10), it is possible to achieve both the effect of suppressing separation and the effect of suppressing the increase in drag.
(11) In some embodiments, in the wind turbine blade defined in any one of the above configurations (1) to (10), the plurality of fins include a plurality of fin sets (for example, the above-described fin sets 25) each formed by a pair of adjacent fins (for example, the above-described fins 12A 12B), and provided that Z is an array pitch of two adjacent fin sets of the plurality of fin sets, and H is a height of each of the pair of fins, 6.0≤Z/H≤8.0 is satisfied.
   As described above, with the object of increasing the effect of suppressing separation, it is desirable to arrange the fins of the vortex generators in high density. On the other hand, as the adjacent fin sets are arranged closer to one another, the effect of suppressing separation may be reduced due to interference among generated longitudinal vortexes. Thus, by arranging the vortex generators so as to satisfy 6.0≤Z/H≤8.0 as defined in the above configuration (11), it is possible to achieve both the effect of suppressing separation and the effect of suppressing the increase in drag.
(12) In some embodiments, in the wind turbine blade defined in any one of the above configurations (1) to (11), the plurality of fins include a plurality of fin sets (for example, the above-described fin sets 25) each formed by a pair of adjacent fins (for example, the above-described fins 12A 12B), and provided that H is a height of each of the pair of fins, 0.02≤H/R≤0.07 is satisfied.
   With the wind turbine blade defined in the above configuration (12), by adopting the fins each having the appropriate height according to the radius R of the wind turbine rotor 93, it is possible to achieve both the effect of suppressing separation and the effect of suppressing the increase in drag.
(13) In some embodiments, in the wind turbine blade defined in any one of the above configurations (1) to (12), the plurality of fins include a pair of adjacent fins (for example, the above-described fins 12A, 12B), and provided that H is a height of each of the pair of fins, and C is a maximum chord length of the wind turbine blade, 0.3%≤H/C≤0.9% is satisfied.
   With the wind turbine blade defined in the above configuration (13), by adopting the fins each having the appropriate height according to the maximum chord length of the wind turbine blade, it is possible to achieve both the effect of suppressing separation and the effect of suppressing the increase in drag.
(14) In some embodiments, in the wind turbine blade defined in any one of the above configurations (1) to (13), the plurality of fins include a pair of adjacent fins (for example, the above-described fins 12A, 12B), and provided that H is a height of each of the pair of fins, and L is a chord length of each of the pair of fins at a position of a root of each of the fins, 2.0≤L/H≤4.0 is satisfied.
   With the wind turbine blade defined in the above configuration (14), by adopting the fins each having the appropriate height according to the chord length of each of the fins, it is possible to achieve both the effect of suppressing separation and the effect of suppressing the increase in drag.
(15) In some embodiments, in the wind turbine blade defined in any one of the above configurations (1) to (14), an angle θ formed by a chord of each of the plurality of fins (for example, the above-described fin chord 24) with respect to a wind inflow direction satisfies 12°≤θ≤18°.
   With the wind turbine blade defined in the above configuration (15), by arranging the fins in the appropriate direction according to the wind inflow direction, it is possible to achieve both the effect of suppressing separation and the effect of suppressing the increase in drag.
(16) In some embodiments, in the wind turbine blade defined in any one of the above configurations (1) to (15), provided that, around a pitch rotation axis (for example, the above-described pitch rotation axis O) of the wind turbine blade, α1 is an angle from a leading edge of the wind turbine blade to the first fin, and α2 is an angle from the leading edge to the second fin, the at least one first fin includes at least one first fin satisfying 25°≤α1≤50°, and the at least one second fin includes at least one second fin satisfying 40°≤α2≤90°.
   As a result of intensive researches by the present inventors, it became clear that appropriate arrangement of the vortex generators around the pitch rotation axis of the wind turbine blade is different depending on the radial direction position in order to suppress the separation of the flow along the blade surface of the wind turbine blade. Thus, by appropriately setting the angular positions of the first fin and the second fin, which are different in the radial direction position, from the leading edge around the pitch rotation axis as described above, it is possible to achieve both the effect of suppressing separation and the effect of suppressing the increase in drag.
(17) A method of deciding arrangement of a plurality of vortex generators (for example, the above-described vortex generators 10) for a wind turbine blade (for example, the above-described wind turbine blade 1) according to at least one embodiment of the present disclosure includes a step of deciding arrangement of a plurality of fins (for example, the above-described fins 12) included in the plurality of vortex generators.
   Provided that r/R is a ratio of a radial direction position r to a radius R of a wind turbine rotor including the wind turbine blade, and x/c is a ratio of a chord direction position x to a chord length c of the wind turbine blade, the step includes a step of deciding arrangement of at least one first fin in a region (for example, the above-described first region M (Ma)) satisfying 0≤r/R≤0.1 and 0≤x/c≤0.2, and a step of deciding arrangement of at least one second fin in a region (for example, the above-described second region N (Na)) satisfying 0.1≤r/R≤0.3 and 0.1≤x/c≤0.5.

With the method of deciding arrangement of the plurality of vortex generators for the wind turbine blade defined in the above configuration (17), it is possible to suppress the increase in drag caused by the vortex generators while suppressing the separation of the flow along the blade surface of the wind turbine blade, and to implement the wind turbine blade having high aerodynamic performance. Thus, it is possible to implement the increase in energy production and the increase in torque of the wind turbine blade.

## Claims

1. A wind turbine blade comprising a plurality of vortex generators,
wherein the plurality of vortex generators include a plurality of fins,
wherein a fin closest to a blade tip of the plurality of fins is positioned between a blade root, and a middle position between the blade tip and the blade root, and
wherein, provided that r/R is a ratio of a radial direction position r to a radius R of a wind turbine rotor including the wind turbine blade, and x/c is a ratio of a chord direction position x to a chord length c of the wind turbine blade,
the plurality of fins include:
at least one first fin arranged in a region satisfying 0≤r/R≤0.1 and 0≤x/c≤0.2; and
at least one second fin arranged in a region satisfying 0.1≤r/R≤0.3 and 0.1≤x/c≤0.5.

2. The wind turbine blade according to claim 1,
wherein the plurality of fins include a plurality of fin sets each formed by a pair of adj acent fins, and
wherein the plurality of vortex generators include, for each of the fin sets, a platform for supporting the pair of fins.

3. The wind turbine blade according to claim 2,
wherein a plurality of platforms of the plurality of vortex generators include:
a first platform;
a second platform arranged adjacent to the first platform between the first platform and the middle position; and
a third platform arranged adjacent to the first platform between the first platform and the blade root, and
wherein, defining a straight line connecting a position closest to the second platform in the first platform and a position closest to the first platform in the second platform as a first straight line, and
defining a straight line connecting the position closest to the second platform in the first platform and a position closest to the third platform in the first platform as a second straight line,
an angle between the first straight line and the second straight line is not greater than 20 degrees.

4. The wind turbine blade according to any one of claims 1 to 3,
wherein the at least one first fin includes at least one fin arranged in a region satisfying 0.03≤r/R≤0.1 and 0.05≤x/c≤0.19, and
wherein the at least one second fin includes at least one fin arranged in a region satisfying 0.1≤r/R≤0.27 and 0.12≤x/c≤0.47.

5. The wind turbine blade according to claim 4,
wherein the at least one second fin includes at least one fin arranged in a region satisfying 0.2≤r/R≤0.25 and 0.25≤x/c≤0.45.

6. The wind turbine blade according to any one of claims 1 to 5,
wherein the chord direction position x of each of the plurality of vortex generators is
a position decided based on a result of a CFD analysis, in a region satisfying r/R≤0.2, and
a position shifted to a side of a leading edge of the wind turbine blade with respect to the position determined by the result of the CFD analysis, in a region satisfying 0.15≤r/R≤0.3.

7. The wind turbine blade according to any one of claims 1 to 6,
wherein the plurality of fins include a plurality of fin sets each formed by a pair of adjacent fins, and
wherein, provided that Z is an array pitch of two adjacent fin sets of the plurality of fin sets, and S is an interval between respective trailing edges of the pair of fins, 1.5≤Z/S≤3.0 is satisfied.

8. The wind turbine blade according to any one of claims 1 to 7,
wherein the plurality of fins include a plurality of fin sets each formed by a pair of adj acent fins, and
wherein, provided that S is an interval between respective trailing edges of the pair of fins, and H is a height of each of the pair of fins, 2.5≤S/H≤5.0 is satisfied.

9. The wind turbine blade according to any one of claims 1 to 8,
wherein the plurality of fins include a pair of adj acent fins, and
wherein the pair of fins are arranged plane-symmetrically with respect to a plane along a chord direction of the wind turbine blade.

10. The wind turbine blade according to any one of claims 1 to 9,
wherein the plurality of fins are arranged between the blade root and a starting point of a flat back of the wind turbine blade.

11. The wind turbine blade according to any one of claims 1 to 10,
wherein the plurality of fins include a plurality of fin sets each formed by a pair of adjacent fins, and
wherein, provided that Z is an array pitch of two adjacent fin sets of the plurality of fin sets, and H is a height of each of the pair of fins, 6.0≤Z/H≤8.0 is satisfied.

12. The wind turbine blade according to any one of claims 1 to 11,
wherein the plurality of fins include a plurality of fin sets each formed by a pair of adjacent fins, and
wherein, provided that H is a height of each of the pair of fins, 0.02≤H/R≤0.07 is satisfied.

13. The wind turbine blade according to any one of claims 1 to 12,
wherein the plurality of fins include a pair of adj acent fins, and
wherein, provided that H is a height of each of the pair of fins, and C is a maximum chord length of the wind turbine blade, 0.3%≤H/C≤0.9% is satisfied.

14. The wind turbine blade according to any one of claims 1 to 13,
wherein the plurality of fins include a pair of adj acent fins, and
wherein, provided that H is a height of each of the pair of fins, and L is a chord length of each of the pair of fins at a position of a root of each of the fins, 2.0≤L/H≤4.0 is satisfied.

15. The wind turbine blade according to any one of claims 1 to 14,
wherein an angle θ formed by a chord of each of the plurality of fins with respect to a wind inflow direction satisfies 12°≤θ≤18°.

16. The wind turbine blade according to any one of claims 1 to 15,
wherein, provided that, around a pitch rotation axis of the wind turbine blade, α1 is an angle from a leading edge of the wind turbine blade to the first fin, and α2 is an angle from the leading edge to the second fin,
the at least one first fin includes at least one first fin satisfying 25°≤α1≤50°, and
the at least one second fin includes at least one second fin satisfying 40°≤α2≤90°.

17. A method of deciding arrangement of a plurality of vortex generators for a wind turbine blade, comprising
a step of deciding arrangement of a plurality of fins included in the plurality of vortex generators,
wherein, provided that r/R is a ratio of a radial direction position r to a radius R of a wind turbine rotor including the wind turbine blade, and x/c is a ratio of a chord direction position x to a chord length c of the wind turbine blade,
the step includes:
a step of deciding arrangement of at least one first fin in a region satisfying 0≤r/R≤0.1 and 0≤x/c≤0.2; and
a step of deciding arrangement of at least one second fin in a region satisfying 0.1≤r/R≤0.3 and 0.1≤x/c≤0.5.
